# EUROPEAN PATENT SPECIFICATION

(11) **EP 3 037 752 B1**
(45) Date of publication and mention of the grant of the patent: **15.04.2020**
(21) Application number: 15201434.6
(22) Date of filing: 18.12.2015
(51) Int. Cl.: F25D 17/06, F25D 23/00, F04D 29/64, F04D 25/06

(54) **REFRIGERATOR HAVING FAN MOTOR**
KÜHLSCHRANK MIT LÜFTERMOTOR
RÉFRIGÉRATEUR COMPORTANT UN MOTEUR DE VENTILATEUR

(30) Priority: 23.12.2014 KR 20140187460
(43) Date of publication of application: 29.06.2016
(73) Proprietor: LG Electronics Inc., Yeongdeungpo-gu Seoul 150-721 (KR)
(72) Inventor: LEE, Bongkook, 08592 Seoul (KR)
(74) Representative: Morrall, Jonathan Ian McLachlan

(56) References cited:
- JP-A- 2007 107 732
- JP-A- 2010 022 168
- KR-A- 20040 065 529
- KR-A- 20140 123 814
- KR-U- 20090 000 907
- TW-A- 201 107 609
- US-A1- 2009 185 919
- US-A1- 2012 039 729

## Description

### TECHNICAL FIELD

The present disclosure relates to a refrigerator including a fan-motor.

### BACKGROUND

As known widely, a refrigerator is a device for keeping foods in a fresh or frozen state for an extended time.

Such refrigerator includes a refrigerator main body having a storage chamber therein, a door for opening and closing the storage chamber, and a refrigeration cycle device for providing cool air into the storage chamber.

A circulation passage through which air circulates is provided in the storage chamber.

A fan-motor assembly is an apparatus facilitating the air circulation inside a refrigerator.

The fan-motor assembly includes a fan having a hub and a blade, and a motor disposed in the hub.

The motor includes a permanent magnet mounted on an inner surface of the hub, and a stator disposed in the permanent magnet.

However, in the related art fan-motor assembly, the permanent magnet provided in the hub of the fan generates vibration during driving of the fan-motor assembly, which causes noise generation.

Considering this problem, for a certain type of a fan motor assembly, a motor is provided with a case which accommodates therein a stator and a rotor for supporting them, and the motor is then installed in a hub of a fan.

However, in the related art fan-motor assembly having the motor with the case, a coupling portion for coupling the case is formed at the outside of the case. With the formation of the coupling portion, a gap between an inner surface of the hub of the fan and an outer surface of the case is increased. As a size of the case is reduced, a real size of the motor which is accommodated in the case to generate driving force is reduced, which results in lowering an output of the motor.

KR2014/0123814A concerns a refrigerator fan assembly having motor located in a case disposed in the hub of the fan. TW201107609A concerns an inner-rotor type fan. US2012/039729A concerns a cooling fan having an inner rotor-type motor. JP2007 107732A concerns a refrigerator comprising a fan unit having an outer rotor-type motor. US 2009/185919 discloses a fan assembly including a rotation shaft, a permanent magnet having a receiving space therein and rotatable around a central axis of the rotation shaft, a fan including a hub having a receiving space therein with one side open and disposed outside the permanent magnet, the fan being rotatable around the central axis of the rotation shaft, a stator disposed inside the permanent magnet, and a blocking portion disposed at the open side of the hub in an axial direction, the combination configured to block an introduction of foreign materials into the fan assembly and to reduce the size of the fan assembly.

### SUMMARY

Therefore, to obviate the related art problems, an aspect of the detailed description is to provide a refrigerator having a fan-motor assembly, capable of reducing a gap between a hub and a case of a motor provided in the hub.

Another aspect of the detailed description is to provide a refrigerator having a fan-motor assembly, capable of preventing an output of a motor from being lowered by preventing a reduction of a real size of the motor caused due to a size reduction of a case.

Another aspect of the detailed description is to provide a refrigerator having a fan-motor assembly capable of reducing an axial length thereof.

Another aspect of the detailed description is to provide a refrigerator having a fan-motor assembly, capable of preventing a reduction of a real size of a motor caused due to an installation of a printed circuit board.

Another aspect of the detailed description is to provide a refrigerator having a fan-motor assembly, capable of preventing an electric disconnection of a control circuit of a printed circuit board due to a slack (a loosed gap) of the printed circuit board.

Another aspect of the detailed description is to provide a refrigerator having a fan-motor assembly, capable of preventing an increase in a number of components required and an assembling time, which results from increased coupling places for a case.

To achieve these and other advantages and in accordance with the purpose of this specification, as embodied and broadly described herein, there is provided a refrigerator as defined in appended claim 1. The examples of the following description that are not covered by the appended claims are considered to be useful for understanding the invention. The refrigerator includes a refrigerator main body having a storage chamber, a cool air circulation passage along which cool air of the storage chamber circulates, and a fan-motor assembly circulating the cool air, wherein the fan-motor assembly comprises a fan including a hub and a plurality of blades, the hub having a first accommodation space and the plurality of blades being disposed outside the hub, a motor including a stator and a rotor, the motor located in a case, the case having a cylindrical shape and being disposed in the hub, the stator being disposed in the case, and the rotor having a rotational shaft coupled to the hub and being rotatably disposed in the stator, and a support plate that is coupled to the case and that is configured to support the fan and the motor.

Each of the coupling rods may protrude from the first body and is inserted into the second body.

The second body may be provided with a coupling portion allowing the second body to be coupled to the coupling rods.

The coupling portion may include melted portions (fusions or welds) of the second body at which end portions of the coupling rods are melted onto the second body for coupling.

The first body may be disposed at an open side of the hub, and the first body and the support plate may be provided with an engagement portion by which the first body and the support plate are engaged with each other in an axial direction.

The engagement portion may include a protrusion protruding from one of the first body and the support plate, and a protrusion accommodating portion located at the other of the first body and the support plate such that the protrusion is inserted into the protrusion accommodating portion.

The first body may further include a coupling portion (join part) coupled to the support plate.

Each of the first body and the second body may include stator supporting portions being respectively in contact with an edge of the stator to support the stator.

The stator supporting portions may protrude from inner surfaces of the first body and the second body, respectively, and extend along a circumferential direction of the first body and the second body.

The case may be provided with a bearing to support the rotational shaft.

The fan motor assembly may further include a printed circuit board provided in the case, and having a control circuit configured to control a rotation of the rotor.

The printed circuit board may be disposed between the stator core and the case.

The printed circuit board may be provided with coupling rod accommodating holes through which the coupling rods are inserted.

The fan motor assembly may further include fixing portions to fix the stator and the printed circuit board.

Each of the fixing portions may include a fixing pin provided at the stator core.

Each of the fixing portions may include a fixing pin hole located at the printed circuit board and configured to receive the fixing pin.

Each of the fixing portions may include a bonded portion located at an end portion of the fixing pin and inserted in the fixing pin hole.

### BRIEF DESCRIPTION OF THE DRAWINGS

FIG 1 is a diagram illustrating an example refrigerator having a fan-motor assembly.
FIG 2 is a diagram illustrating an example fan-motor assembly.
FIG 3 is a diagram illustrating an example stator.
FIG 4 is a diagram illustrating an example first body.
FIG 5 is a diagram illustrating an example second body.
FIG 6 is a diagram illustrating an example area of a coupling portion.
FIG 7 is a diagram illustrating an example area of an engagement portion.
FIG 8 is a diagram illustrating another example coupling portion.
FIG 9 is a diagram illustrating another example variation of a coupling portion.

### DETAILED DESCRIPTION

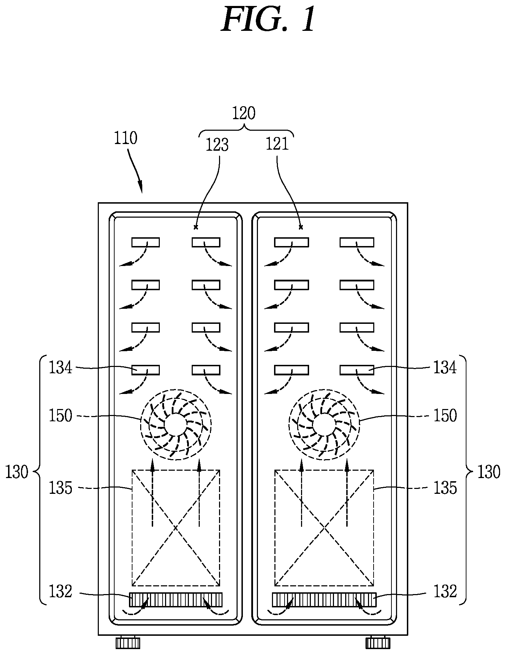

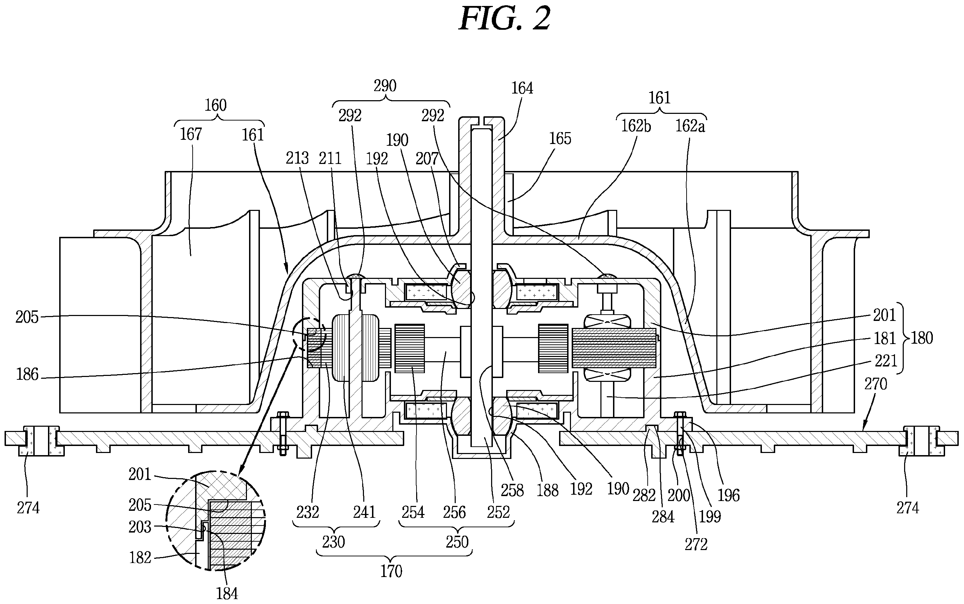

FIG 1 illustrates an example refrigerator having a fan-motor assembly and FIG 2 illustrates an example fan-motor assembly. A refrigerator having a fan-motor assembly may include a refrigerator main body 110 having a storage chamber 120, a cool air circulation passage 130 through which cool air of the storage chamber 120 circulates, and a fan-motor assembly 150 provided in the cool air circulation passage 130 to allow for the circulation of the cool air.

The storage chamber 120 may be formed in the refrigerator main body 110.

A door for opening and closing the storage chamber 120 may be provided at the refrigerator main body 110.

The storage chamber 120, for example, may be provided in plurality configured to be arranged in left and right directions of the refrigerator main body 110.

The storage chamber 120, for example, may include a freezing chamber 121 and a refrigerating chamber 123.

In some implementations, the refrigerator can be a side-by-side refrigerator in which the freezing chamber 121 and the refrigerating chamber 123 of the refrigerator main body 110 are disposed in left and right directions of the refrigerator main body 110. In some other implementations, the refrigerator can be a top mount type refrigerator in which the freezing chamber and the refrigerating chamber are disposed up and down, or a so-called bottom freezer type refrigerator in which the refrigerating chamber and the freezing chamber are disposed up and down.

The refrigerator main body 110, for example, may include the cool air circulation passage 130 through which air of the storage chamber 120 circulates.

The cool air circulation passage 130 may be provided with a cool air introduction opening 132 through which cool air is introduced, and a cool air discharge opening 134 through which cool air is discharged.

The cool air introduction opening 132, for example, may be located at a lower portion of the storage chamber 120.

The cool air discharge opening 134, for example, may be located at an upper portion of the storage chamber 120.

The cool air circulation passage 130, for example, may be provided with an evaporator 135 therein for cooling air flowing therethrough in a heat-exchanging manner.

In some implementations, the cool air circulation passage 130 is independently provided in each of the freezing chamber and the refrigerating chamber such that air can independently flow and be cooled. However, the cool air circulation passage 130 may also be configured such that an evaporator is installed only in the freezing chamber and cool air passed through the evaporator is discharged to the freezing chamber and/or refrigerating chamber.

Meanwhile, the cool air circulation passage 130 may be provided with a fan-motor assembly for facilitating a circulation of air.

The fan-motor assembly 150, for example, may include a fan 160 provided with a hub 161 having an accommodation space therein, and a plurality of blades 167 disposed at an outer side of the hub 161, a motor 170 provided with a case 180 formed in a cylindrical shape and accommodated in the hub 161, a stator 230 disposed in the case 180, and a rotor 250 having a rotational shaft 252 with one side coupled to the hub 161 and rotatably disposed in the stator 230, and a support plate 270 coupled to the case 180 to support the fan 160 and the motor 170.

The fan 160, for example, may be configured as a centrifugal fan by which air is sucked in an axial direction and discharged in a radial direction.

The fan 160 may include a hub 161 having an accommodation space defined therein, and a plurality of blades 167 disposed at an outer side of the hub 161.

Here, the fan 160, for example, may be configured as a turbo fan having the blades 167 which are disposed at a circumference of the hub 161 in a radial direction and spaced apart from one another in a circumferential direction.

The hub 161, for example, may be formed in a shape of a cup with one side open.

The hub 161 may be configured such that its outer width is gradually increasing toward the open side.

The hub 161, for example, may be provided with a circumferential section 162a, and a blocking section 162b which blocks an end portion of the circumferential section 162a.

The blocking section 162b may be formed in a shape of a circular plate.

Here, the blocking section 162b may be disposed perpendicular to the rotational shaft 252.

One side of the circumferential section 162a may have a section shape which is curved such that an inner diameter thereof is gradually increasing from the blocking section 162b.

The other side of the circumferential section 162a may have a shape of a plate which is curved to be perpendicular to the rotational shaft 252.

The hub 161, for example, may be provided with a shaft accommodating portion 164 in which the rotational shaft 252 of the motor 170 to be explained later is inserted.

The shaft accommodating portion 164, for example, may protrude from a center of the blocking section 162b in an axial direction.

The shaft accommodating portion 164 may protrude to outside of the hub 161.

A pressing member 165 for pressing the shaft accommodating portion 164 such that the shaft accommodating portion 164 is closely adhered onto the rotational shaft 252 of the motor 170 may be provided at an outer side of the shaft accommodating portion 164.

The pressing member 165, for example, may be configured as a spring (coil spring).

The motor 170, for example, may include a case 180 formed in a cylindrical shape and accommodated in the hub 161, a stator 230 disposed in the case 180, and a rotor 250 having the rotational shaft 252 with one side coupled to the hub 161 and rotatably disposed in the stator 230.

The case 180 may be formed in a cylindrical shape.

The case 180 may be concentrically disposed with the hub 161.

This may result in a reduction of a gap between an inner surface of the hub 161 and an outer surface of the case 180.

With the configuration, supposing the same size of the hub 161, a real size of the case 180 may increase and a size of the motor 170 accommodated in the case 180 may increase, thereby raising an output of the motor 170.

The stator 230 may include a stator core 232 having an accommodation space in which the rotor 250 is accommodated, and a stator coil 241 wound on the stator core 232.

The stator core 232, for example, may include a yoke 233 in a circular shape, a plurality of poles 234 protruding from an inner surface of the yoke 233 toward a center and spaced apart from one another along a circumferential direction, and slots 235 disposed between adjacent poles 234.

The stator coil 241, for example, may be wound on a circumference of each pole 234 in a concentrated manner.

The stator coil 241 may be provided with a plurality of coil portions 243 wound on the circumferences of the respective poles.

An empty space of the slot 235 may be formed between the adjacent coil portions 243.

Each coil portion 243, for example, is formed with almost the same width at the circumference of each pole 234. Accordingly, a width of the empty space of the slot 235 may increase toward the yoke 233 in a radial direction.

The stator 230 may include an insulator 247 which is coupled to the stator core 232 before winding the stator coil 241.

The insulator 247 may be formed of an electric insulating member.

The formation of the insulator 247 may allow the stator core 232 and the stator coil 241 to be insulated from each other.

The insulator 247 may be formed of a synthetic resin member.

The insulator 247 may be formed by injection molding.

The insulator 247, for example, may be coupled to both sides of the stator core 232 in an axial direction.

The insulator 247, for example, may be configured to cover circumferential surfaces of the poles 234, an inner surface of the yoke 233, and upper and lower surfaces of the yoke 233.

The rotor 250, for example, may include a rotational shaft 252 and a permanent magnet 254 which rotates centering on the rotational shaft 252.

The permanent magnet 254, for example, may be formed in a cylindrical shape.

The rotor 250, for example, may be provided with a frame 256 coupled to an inner side of the permanent magnet 254.

The frame 256 may be provided with a rotational shaft coupling portion 258 to which the rotational shaft 252 can be coupled.

The rotational shaft 252, for example, may have one side coupled to the frame 256 and another side connected to the fan 160.

The rotational shaft 252 may be fixedly coupled to the shaft accommodating portion 164.

Accordingly, a rotational force of the rotor 250 may be transferred to the fan 160 such that the fan 160 can rotate along with the rotational shaft 252.

The support plate 270, for example, may be formed in a shape of a plate.

The support plate 270, for example, may be formed in a shape of a rectangular plate.

The support plate 270 may include through holes 272 through which coupling members (screws or bolts) 199 are inserted via the case 180.

The support plate 270 may be coupled to a desired object (e.g., the cool air circulation passage 130) by coupling members.

The support plate 270, for example, may include an anti-vibration member (anti-vibration rubber) 274 which prevents vibration from being transferred to the desired object.

Meanwhile, the fan-motor assembly 150 may include a printed circuit board 260 having a control circuit for controlling a rotation of the rotor 250.

The printed circuit board 260 may be provided in the case 180.

The printed circuit board 260, for example, may be disposed between the case 180 and the stator 230.

The printed circuit board 260, for example, may be provided at one side (a lower side, in the drawing) of the stator 230.

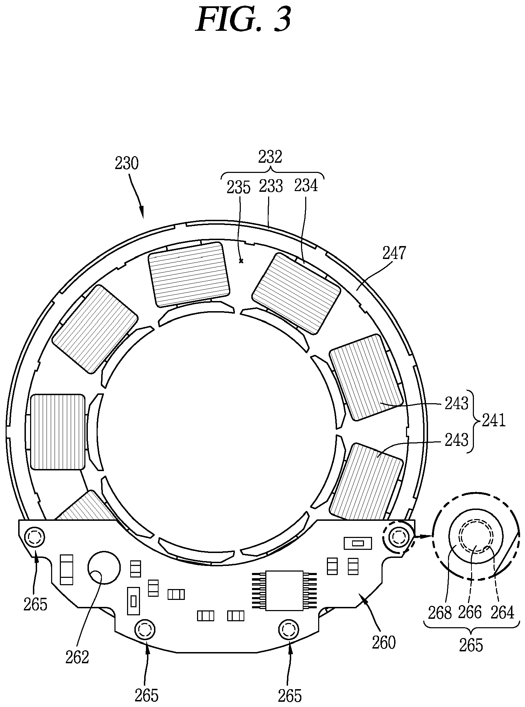

FIG. 3 illustrates an example stator. The printed circuit board 260, for example, may be formed in an arcuate shape.

A coupling rod accommodating hole 262 may be formed through the printed circuit board 260 such that a coupling rod 221 to be explained later is accommodated therein.

Fixing portions 265 for preventing a relative movement between the stator 230 and the printed circuit board 260 may be provided between the stator 230 and the printed circuit board 260.

Each of the fixing portions 265, for example, may be provided with a fixing pin 266 provided at the stator 230, and a fixing pin hole 264 provided at the printed circuit board 260.

The fixing pin 266, for example, may be provided at the stator core 232.

The fixing pin 266 may be made of a metal, e.g., copper (Cu).

The fixing pin 266, for example, may be configured such that one side thereof is press-fit into the stator core 232.

The printed circuit board 260 may be provided with the fixing pin hole 264 in which the fixing pin 266 is inserted.

A bonded portion 268 at which the fixing pin 266 and the printed circuit board 260 are integrally bonded to each other may be formed at an end portion of the fixing pin 266 inserted in the fixing pin hole 264.

The bonded portion 268, for example, may be formed in a manner of soldering the fixing pin 266 and the printed circuit board 260 with each other.

In some implementations, the fixing portion 265 is provided by four, but the number of the fixing portion 265 may be appropriately adjustable.

Meanwhile, the case 180, for example, may include a first body 181 and a second body 201 coupled to each other in a surface-contacting manner to define an accommodation space therein, and coupling rods 221 protruding from one of the first body 181 and the second body 201 and inserted through the stator 230 to be coupled to another one of the first body 181 and the second body 201.

The case 180, for example, may include a first body 181 and a second body 201. The first body 181 and the second body 201 are coupled to each other in a surface-contacting manner configured to define an accommodation space therein.

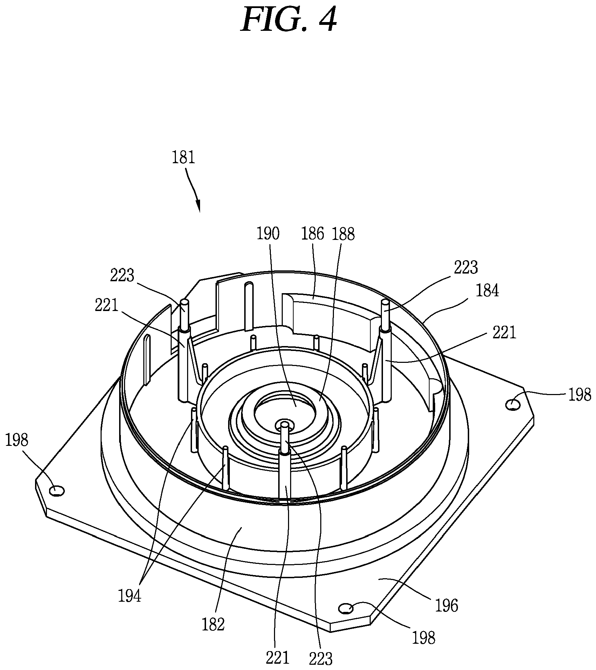

FIG. 4 illustrates an example first body of a case. The first body 181, for example, may define therein a cylindrical accommodation space with one side open.

The first body 181 may be provided with a cylindrical portion 182 defining a cylindrical accommodation space therein.

The first body 181, for example, may be provided with an insertion rib 184 inserted into the second body 201.

The insertion rib 184 may be formed in a stepped manner to have a more reduced outer diameter than an outer diameter of the cylindrical portion 182.

The first body 181 may include a stator supporting portion 186 for supporting the stator 230.

The stator supporting portion 186 of the first body 181, for example, may protrude from an inner surface of the cylindrical portion 182 in a radial direction and extend in a circumferential direction.

The stator supporting portion 186 of the first body 181, for example, may have an arcuate shape.

The first body 181, for example, may include a bearing 190 for supporting the rotational shaft 252.

The bearing 190 may include a rotational shaft opening 192 which is provided at a center thereof and in which the rotational shaft 252 is inserted.

The bearing 190, for example, may have a spherical shape whose both ends are evenly cut off along an axial direction.

The first body 181 may be provided with a bearing accommodating portion 188 in which the bearing 190 is inserted.

The first body 181, for example, may include guides 194 which protrude from a circumference of the bearing accommodating portion 188.

The guides 194, for example, may be implemented into a shape of a circular bar.

The guides 194, for example, may protrude in an axial direction of the bearing accommodating portion 188 and be spaced apart from one another along a circumferential direction of the bearing accommodating portion 188.

The guides 194, for example, may be formed to be located between the adjacent poles 234 of the stator 230, respectively.

This structure may allow the stator 230 to be coupled into the first body 181 at a preset accurate position.

The first body 181, for example, may include a second coupling portion (joint part) 196 which is provided at one side of the cylindrical portion 182 and more extends than the outer diameter of the cylindrical portion 182.

The second coupling portion 196, for example, may be located at an outer side of the hub 161.

The second coupling portion 196, for example, may be brought into a surface-contact with the support plate 270.

The second coupling portion 196, for example, may be implemented into a shape of a rectangular plate.

The second coupling portion 196, for example, may be provided with coupling member insertion holes 198 through which coupling members 199 are inserted to couple the first body 181 and the support plate 270 to each other.

The coupling member insertion holes 198, for example, may be formed at edge areas of the second coupling portion 196, respectively.

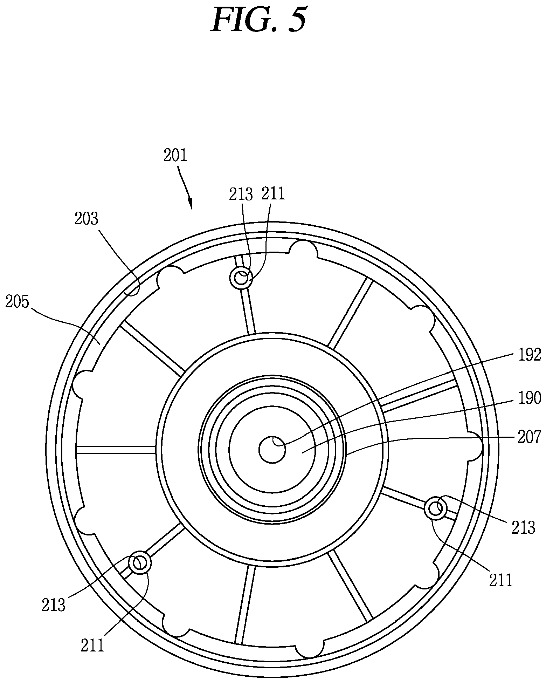

FIG. 5 illustrates an example second body of a case. The second body 201, for example, may form a circular accommodation space therein with one side open.

The second body 201, for example, may include an accommodating portion 203 in which the insertion rib 184 of the first body 181 is inserted.

The accommodating portion 203 of the second body 201, for example, may be cut off in a manner that an inner diameter of the second body 201 extends in a radial direction and extend along a circumferential direction.

The accommodating portion 203 of the second body 201, for example, may have a depth (height) corresponding to a height of the insertion rib 184 of the first body 181.

The second body 201, for example, may include a stator supporting portion 205 which comes in contact with the stator 230 to support the stator 230.

The stator supporting portion 205 of the second body 201, for example, may be formed in a manner of protruding from an inner surface of the second body 201 in a radial direction and extending in a circumferential direction.

The stator supporting portion 205 of the second body 201, for example, may have an arcuate shape.

The second body 201, for example, may include a bearing 190 for supporting the rotational shaft 252.

The bearing 190, for example, may have a spherical shape whose both ends are evenly cut off along an axial direction.

The second body 201 may be provided with a bearing accommodating portion 207 in which the bearing 190 is inserted.

Meanwhile, the case 180 may include coupling rods 221 which protrude from one of the first body 181 and the second body 201 and are coupled to another one of the first body 181 and the second body 201.

The coupling rods 221, for example, as illustrated in FIG 4, may be formed on the first body 181.

The coupling rods 221, for example, may be provided by three.

The coupling rods 221, for example, may be spaced apart from one another along a circumferential direction of the first body 181 with an equal interval.

The coupling rods 221, for example, may have a shape of a circular bar.

Each of the coupling rods 221, for example, may include an insertion end portion 223 inserted into the second body 201.

The insertion end portion 223 may be formed at an end area (upper portion) of the coupling rod 221.

The insertion end portion 223, for example, may have a more reduced outer diameter than that of a lower portion (main body) of the coupling rod 221.

The second body 201 may include boss portions 211 to which the coupling rods 221 are coupled.

The boss portions 211, for example, may protrude from an inner surface of the second body 201 in an axial direction.

Each of the boss portions 211 may be provided with a coupling rod receiving hole 213 formed therethrough, such that the coupling rod 221 is inserted into the coupling rod receiving hole 213.

Meanwhile, the case 180 and the support plate 270, for example, may be provided with an engagement portion 280 by which the case 180 and the support plate 270 are engaged with each other in a manner of being perpendicular to an axial direction.

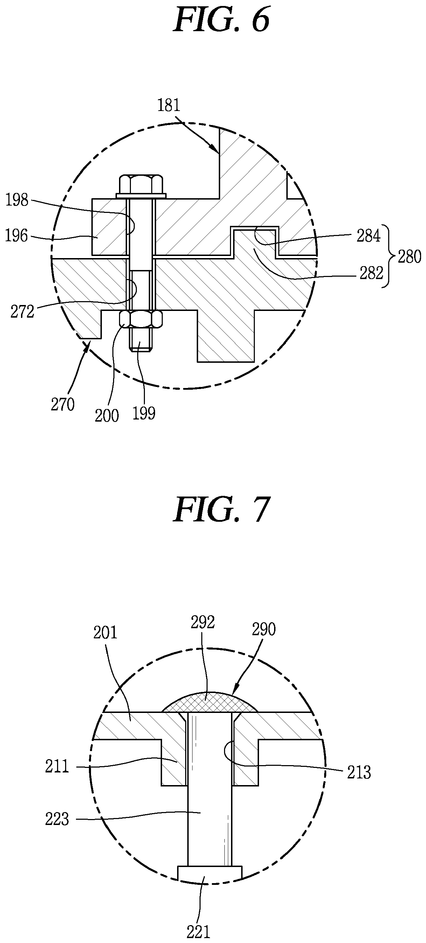

FIG. 6 illustrates an example area of a coupling portion. The engagement portion 280, for example, may include a protrusion 282 which protrudes from one of contact surfaces of the case 180 and the support plate 270, and a protrusion accommodating portion 284 which is formed at another one of the contact surfaces of the case 180 and the support plate 270 such that the protrusion 282 is inserted therein.

This configuration may prevent the case 180 and the support plate 270 from being relatively moved perpendicular to an axial direction.

This may result in reducing coupling places for the coupling members (bolts or screws) 199 to couple the case 180 and the support plate 270.

Accordingly, the number of required coupling points or spots, such as the coupling members 199, e.g. bolts and nuts, nuts 200 and the like, for coupling the case 180 and the support plate 270 may be reduced.

Also, a coupling time of the case 180 and the support plate 270 may be shortened. The protrusion 282, for example, may be formed at the support plate 270.

The protrusion 282, for example, may protrude from a plate surface of the support plate 270 and extend in a circumferential direction of the case 180.

The protrusion accommodating portion 284 may be formed at the first body 181.

The protrusion accommodating portion 284, for example, may be recessed into one side (a lower surface in the drawing) of the first body 181.

FIG. 7 illustrates an example area of an engagement portion. For example, the second body 201 may include a first coupling portion 290 which allows the second body 201 to be coupled to the coupling rod 221.

The first coupling portion 290, for example, may include a melted portion (fusions or welds) 292 which is melted and coupled to the second body 201 by heating an end (an end portion) of the coupling rod 221 protruding to the exterior of the second body 201.

In some implementations, the first coupling portion 290 includes three melted portions 292, but the number of the melted portion 292 may be adjustable according to the number of coupling rods 221.

This configuration may allow for reducing a gap between the hub 161, e.g., an inner surface of the hub 161, and the case 180.

Explaining this in more detail, a gap between the blocking section 162b of the hub 161 and the case 180 can be reduced. Accordingly, supposing the same length of the hub 161, an axial length of the case 180 can be increased.

This may increase an axial length of the motor 170 (the stator 230 and the rotor 250), thereby improving an output of the motor 170.

Also, supposing the same axial length of the motor 170, an axial length of the hub 161 may be reduced by that much, which may result in a reduction of an axial length of the fan-motor assembly 150.

The fan-motor assembly 150 can have a reduced axial length, thereby reducing a back-and-forth thickness (width) of the cool air circulation passage 130.

Accordingly, a back-and-forth width of a real food storage space of the storage chamber 120 can be increased.

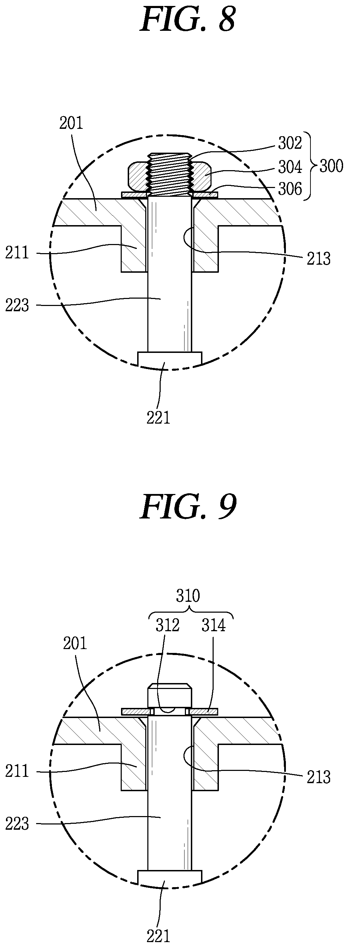

FIG. 8 illustrates another example coupling portion. For example, the coupling portion 300 may include the male screw 302 formed at the end area of the coupling rod 221, and the nut 304 coupled to the male screw 302.

The coupling rod 221 may protrude from an outer surface of the second body 201.

The male screw 302 may be formed at the protruded end portion of the coupling rod 221.

The male screw 302 may be coupled with the nut 304 in a screwing manner.

A washer 306 may be interposed between the nut 304 and the second body 201.

FIG. 9 illustrates another example coupling portion. The coupling portion 310 may include a snap ring 314 coupled to an end portion of the coupling rod 221.

The coupling rod 221 may protrude from an outer surface of the second body 201.

A concave-convex portion 312, for example, may be formed at an end area of the coupling rod 221.

The snap ring 314 may be coupled to the concave-convex portion 312.

With the configuration, when desiring to assemble the fan-motor assembly 150, first, the fixing pins 266 may be press-fit into the stator core 232.

Referring back to FIG. 3, the printed circuit board 260 may be coupled to the fixing pins 266.

The bonded portion 268 may be formed at an end portion of each fixing pin 266 inserted into the fixing pin hole 264 of the printed circuit board 260.

Accordingly, the printed circuit board 260 may be integrally coupled to the stator 230, resulting in preventing a relative movement thereof.

The stator 230 may be inserted into the first body 181.

In this example, the coupling rods 221 of the first body 181 may be coupled by being inserted into the empty spaces between the adjacent coil portions 243 of the stator 230.

The stator 230 may be mounted in the stator supporting portion 186 of the first body 180 and supported.

The rotor 250 may be coupled into the stator 230.

The rotational shaft 252 of the rotor 250 may be inserted into the bearing 190 of the first body 181.

The second body 201 may be coupled to the first body 181.

The rotational shaft 252 may be inserted into the bearing 190 of the second body 201.

The insertion end portions 223 of the coupling rods 221 may be coupled to the boss portions 211 of the second body 201, respectively.

The stator support portion 205 of the second body 201 may come in contact with an upper surface of the stator 230.

Accordingly, the stator 230 may be supported in an axial direction by the stator supporting portion 186 of the first body 181 and the stator supporting portion 205 of the second body 201, respectively. This may result in preventing a generation of a clearance.

Meanwhile, the insertion end portion 223 of each coupling rod 221 inserted through the second body 201 may be melted and coupled on the second body 201 in a heating manner configured to form the melted portion 292.

Accordingly, the first body 181 and the second body 201 may be firmly coupled to each other.

The rotational shaft 252 protruding to the exterior of the second body 201 may be inserted into the shaft accommodating portion 164 of the fan 160.

The pressing member 165 may be coupled to an outer surface of the shaft accommodating portion 164.

The case 180 may be coupled to the support plate 270.

The protrusion 282 of the support plate 270 may be inserted into the protrusion accommodating portion 284 formed at the case 180 (the first body 181).

The coupling members 199, for example, screws or bolts, may be inserted into the coupling member insertion holes 198 of the case 180, for example, the first body 181, and the through holes 272 of the support plate 270, which communicate with each other, and the nuts 200 may be coupled to the coupling members 199, respectively, in a screwing manner.

This may allow the case 180 to be integrally coupled to the support plate 270.

The fan-motor assembly 150 may be disposed in the cool air circulation passage 130 of the refrigerator main body 110.

When the fan-motor assembly 150 starts to rotate, cool air within the storage chamber 120 may be introduced through the cool air introduction opening 132 of the cool air circulation passage 130.

The fan-motor assembly 150 may prevent a generation of vibration and noise due to the permanent magnet 254 during driving, because the permanent magnet 254 of the rotor 250 is spaced apart from the hub 161 of the fan 160.

The cool air introduced in the cool air circulation passage 130 through the cool air introduction opening 132 may flow upward and come in contact with the evaporator 135 configured to be heat-exchanged.

The cool air which has been cooled by heat-exchanging with the evaporator 135 may be discharged to the storage chamber 120 through the cool air discharge opening 134, thereby cooling the storage chamber 120.

The cool air which has cooled the storage chamber 120 is then introduced back into the cool air introduction opening 132. Such series of processes may be repeated to continuously cool the storage chamber 120.

As described above, a case of a motor provided in a hub may have a cylindrical shape, which may result in reducing a gap between the hub and the case and prevent interference between the hub and the case.

The reduced gap between the case and the hub may allow for an increase in a real size of the case in the hub, configured to increase sizes of a stator and a rotor within the case, thereby raising an output of the motor, supporting the same size of the hub.

Coupling rods for coupling a first body and a second body of the case are inserted through the stator between adjacent stator coils, configured to prevent a reduction of real sizes of the case and the motor, which may result in preventing an output of the motor from being lowered due to the reduced size of the motor.

An outer surface of the case may be configured adjacent to an inner surface of the hub, which may prevent a reduction of a real size of the motor, which is caused due to a reduced size of the case. This may result in preventing the output of the motor from being lowered.

With each coupling rod being melted, a protruded length of the coupling rod protruding from the outer surface of the case may be reduced, which may result in preventing an increase in an axial length of the hub.

The melding of each coupling rod with the case may prevent an axial length of the case from being substantially reduced to ensure the protruded length of the coupling rod, thereby preventing an output of the motor from being lowered due to the reduced size of the motor.

A printed circuit board may be provided at one side (a lower side) of a stator in the case, and accordingly a separate accommodation space of the printed circuit board may not be required at an outside of the case, thereby preventing a reduction of a real size of the motor.

Fixing portions for fixing the stator and the printed circuit board may be provided, thereby preventing an electric disconnection of a control circuit of the printed circuit board, which results from a slack of the printed circuit board.
The case and a support plate may be provided with an engagement portion configured to be engaged with each other in a manner of being horizontal with respect to an axial direction. This may result in reducing a number of places for coupling the case and the support plate, thereby reducing a number of components required and an assembling (or coupling) time.

## Claims

1. A refrigerator comprising:
a refrigerator main body (110) having a storage chamber (120);
a cool air circulation passage (130) arranged to guide air of the storage chamber (120); and
a fan-motor assembly (150) arranged to circulate the air,
wherein the fan-motor assembly (150) comprises:
a fan (160) including a hub (161) having a first accommodation space therein and a plurality of blades (167) being disposed outside the hub (161);
a motor (170) including a stator (230) and a rotor (250), the stator (230) having a plurality of stator coils (241), the motor (170) located in a case (180), the case (180) being disposed in the first accommodation space of the hub (161), the stator (230) being disposed in the case (180), and the rotor (250) having a rotational shaft (252) coupled to the hub (161) and being rotatably disposed in a rotor accommodation space of the stator (230); and
a support plate (270) that is coupled to the case (180) and supports the fan (160) and the motor (170),
**characterized in that**
the case (180) comprises:
a first body (181);
a second body (201) coupled to the first body (181) to define a second accommodation space having a circular shape, in which the stator (230) and the rotor (250) are inserted; and
a coupling rod (221) protruding from one of the first body (181) and the second body (201) through a space between adjacent stator coils (241) of the stator (230) and coupling to another of the first body (181) and the second body (201).

2. The refrigerator of claim 1, wherein the coupling rod (221) is formed on the first body (181) and is inserted into the second body (201), and
wherein the second body (201) is provided with a first coupling portion (290), the first coupling portion (290) arranged to allow the second body (201) to be coupled to the coupling rod (221).

3. The refrigerator of claim 2, wherein the first coupling portion (290) comprises a melted portion (292) at which an end portion of the coupling rod (221) is melted onto the second body (201) to provide coupling.

4. The refrigerator of any of claims 1 to 3,
wherein the first body (181) and the support plate (270) are provided with an engagement portion (280) arranged to engage the first body (181) and the support plate (270) with each other in an axial direction.

5. The refrigerator of claim 4, wherein the engagement portion (280) comprises:
a protrusion (282) protruding from one of the first body (181) and the support plate (270); and
a protrusion accommodating portion (284) located at the other of the first body (181) and the support plate (270) and arranged to receive the protrusion (282).

6. The refrigerator of any of claims 1 to 5, wherein the first body (181) further comprises a second coupling portion (196) coupled to the support plate (270).

7. The assembly of any of claims 1 to 6, wherein each of the first body (181) and the second body (201) comprise a stator supporting portion (186, 205), each stator supporting portion (186, 205) being respectively in contact with an edge of the stator (230) to support the stator (230).

8. The refrigerator of claim 7, wherein each stator supporting portion (186, 205) protrudes into the respective first body (181) or second body (201) and extends along a circumferential direction of the respective first body (181) or the second body (201).

9. The refrigerator of any preceding claim, wherein the case (180) comprises a bearing (190) arranged to support the rotational shaft (252).

10. The refrigerator of any preceding claim, further comprising:
a printed circuit board (260) provided in the case (180), and having a control circuit configured to control rotation of the rotor (250).

11. The refrigerator of claim 10, wherein the stator (230) comprises:
wherein the printed circuit board (260) is disposed between the stator core (232) and the case (180).

12. The refrigerator of claim 11, wherein the printed circuit board (260) comprises coupling rod accommodating holes (262) arranged to receive the coupling rods (221).

13. The refrigerator of claim 11 or 12, further comprising fixing portions (265) arranged to fix the stator (230) and the printed circuit board (260).

14. The refrigerator of claim 13, wherein each fixing portion (265) comprises:
a fixing pin (266) provided at the stator core (232);
a fixing pin hole (264) located at the printed circuit board (260) and configured to receive the fixing pin (266); and
a bonded portion (268) located at an end portion of the fixing pin (266) and inserted in the fixing pin hole (264).

## Patentansprüche

1. Kühlschrank, umfassend:
einen Kühlschrankhauptkörper (110) mit einer Lagerungskammer (120);
einen Kühlluftzirkulationsdurchgang (130), der angeordnet ist, um Luft von der Lagerungskammer (120) zu führen; und
eine Lüftermotoranordnung (150), die angeordnet ist, um die Luft zu zirkulieren,
wobei die Lüftermotoranordnung (150) Folgendes umfasst:
einen Lüfter (160), der eine Nabe (161) mit einem ersten Aufnahmeraum darin und einer Vielzahl von Flügeln (167) aufweist, die außerhalb der Nabe (161) angeordnet sind;
einen Motor (170), der einen Stator (230) und einen Rotor (250) beinhaltet, wobei der Stator (230) eine Vielzahl von Statorspulen (241) aufweist, sich der Motor (170) in einem Gehäuse (180) befindet, das Gehäuse (180) in einem ersten Aufnahmeraum der Nabe (161) angeordnet ist, der Stator (230) in dem Gehäuse (180) angeordnet ist und der Rotor (250) eine Drehwelle (252) aufweist, die an die Nabe (161) gekoppelt und drehbar in einem Rotoraufnahmeraum des Stators (230) angeordnet ist; und
eine Stützplatte (270), die an das Gehäuse (180) gekoppelt ist und den Lüfter (160) und den Motor (170) stützt,
**dadurch gekennzeichnet, dass**
das Gehäuse (180) Folgendes umfasst:
einen ersten Körper (181);
einen zweiten Körper (201), gekoppelt an den ersten Körper (181), um einen zweiten Aufnahmeraum mit einer runden Form zu definieren, in den der Stator (230) und der Rotor (250) eingesetzt sind; und
eine Kopplungsstange (221), die von einem von dem ersten Körper (181) und dem zweiten Körper (201) durch einen Raum zwischen benachbarten Statorspulen (241) des Stators (230) vorsteht und den ersten Körper (181) und den zweiten Körper (201) aneinanderkoppelt.

2. Kühlschrank nach Anspruch 1, wobei die Kopplungsstange (221) an dem ersten Körper (181) ausgebildet ist und in den zweiten Körper (201) eingesetzt ist, und
wobei der zweite Körper (201) mit einem ersten Kopplungsabschnitt (290) versehen ist, wobei der erste Kopplungsabschnitt (290) angeordnet ist, um dem zweiten Körper (201) zu gestatten, an die Kopplungsstange (221) gekoppelt zu sein.

3. Kühlschrank nach Anspruch 2, wobei der erste Kopplungsabschnitt (290) einen geschmolzenen Abschnitt (292) umfasst, an dem ein Endabschnitt der Kopplungsstange (221) auf den zweiten Körper (201) geschmolzen ist, um Kopplung bereitzustellen.

4. Kühlschrank nach einem der Ansprüche 1 bis 3, wobei der erste Körper (181) und die Stützplatte (270) mit einem Eingriffsabschnitt (280) versehen sind, der angeordnet ist, damit der erste Körper (181) und die Stützplatte (270) in einer axialen Richtung ineinander eingreifen.

5. Kühlschrank nach Anspruch 4, wobei der Eingriffsabschnitt (280) Folgendes umfasst:
einen Vorsprung (282), der von einem von dem ersten Körper (181) und der Stützplatte (270) vorsteht; und
einen vorsprungaufnehmenden Abschnitt (284), der sich an dem anderen von dem ersten Körper (181) und der Stützplatte (270) befindet und angeordnet ist, um den Vorsprung (282) aufzunehmen.

6. Kühlschrank nach einem der Ansprüche 1 bis 5, wobei der erste Körper (181) ferner einen zweiten Kopplungsabschnitt (196) umfasst, der an die Stützplatte (270) gekoppelt ist.

7. Anordnung nach einem der Ansprüche 1 bis 6, wobei jeder von dem ersten Körper (181) und dem zweiten Körper (201) einen Statorstützabschnitt (186, 205) umfasst, wobei sich jeder Statorstützabschnitt (186, 205) jeweils im Kontakt mit einer Kante des Stators (230) befindet, um den Stator (230) zu stützen.

8. Kühlschrank nach Anspruch 7, wobei jeder Statorstützabschnitt (186, 205) in den entsprechenden ersten Körper (181) oder zweiten Körper (201) vorsteht und sich entlang eines umlaufenden Abschnitts des entsprechenden ersten Körpers (181) oder des zweiten Körpers (201) erstreckt.

9. Kühlschrank nach einem der vorangehenden Ansprüche, wobei das Gehäuse (180) ein Lager (190) umfasst, das angeordnet ist, um die Drehwelle (252) abzustützen.

10. Kühlschrank nach einem der vorangehenden Ansprüche, ferner umfassend:
eine gedruckte Leiterplatte (260), die in dem Gehäuse (180) bereitgestellt ist und einen Steuerkreis aufweist, der dazu ausgelegt ist, Drehung des Rotors (250) zu steuern.

11. Kühlschrank nach Anspruch 10, wobei der Stator (230) umfasst:
wobei die gedruckte Leiterplatte (260) zwischen dem Statorkern (232) und dem Gehäuse (180) angeordnet ist.

12. Kühlschrank nach Anspruch 11, wobei die gedruckte Leiterplatte (260) Kopplungsstangenaufnahmelöcher (262) umfasst, die angeordnet sind, um die Kopplungsstangen (221) aufzunehmen.

13. Kühlschrank nach Anspruch 11 oder 12, ferner umfassend Befestigungsabschnitte (265), die angeordnet sind, um den Stator (230) und die gedruckte Leiterplatte (260) zu befestigen.

14. Kühlschrank nach Anspruch 13, wobei jeder Befestigungsabschnitt (265) Folgendes umfasst:
einen Befestigungsstift (266), der an dem Statorkern (232) bereitgestellt ist,
ein Befestigungsstiftloch (264), das sich auf der gedruckten Leiterplatte (260) befindet und dazu ausgelegt ist, den Befestigungsstift (266) aufzunehmen; und
einen verbundenen Abschnitt (268), der sich an einem Endabschnitt des Befestigungsstifts (266) befindet und in das Befestigungsstiftloch (264) eingesetzt ist.

## Revendications

1. Réfrigérateur comprenant :
un corps principal de réfrigérateur (110) ayant une chambre de stockage (120) ;
un passage de circulation d'air froid (130) agencé pour guider l'air de la chambre de stockage (120) ; et
un ensemble ventilateur-moteur (150) agencé pour faire circuler l'air,
dans lequel l'ensemble ventilateur-moteur (150) comprend :
un ventilateur (160) comprenant un moyeu (161) comportant un premier espace de logement et une pluralité de lames (167) disposées à l'extérieur du moyeu (161) ;
un moteur (170) comprenant un stator (230) et un rotor (250), le stator (230) ayant une pluralité de bobines de stator (241), le moteur (170) étant situé dans un carter (180), le carter (180) étant disposé dans le premier espace de logement du moyeu (161), le stator (230) étant disposé dans le carter (180), et le rotor (250) ayant un arbre rotatif (252) accouplé au moyeu (161) et étant disposé de manière rotative dans un espace de logement de rotor du stator (230) ; et
une plaque de support (270) qui est accouplée au carter (180) et qui supporte le ventilateur (160) et le moteur (170),
**caractérisé en ce que**
le carter (180) comprend :
un premier corps (181) ;
un second corps (201) accouplé au premier corps (181) pour définir un second espace de logement ayant une forme circulaire, dans lequel le stator (230) et le rotor (250) sont insérés ; et
une tige d'accouplement (221) faisant saillie d'un corps parmi le premier corps (181) et le second corps (201) à travers un espace entre des bobines de stator adjacentes (241) du stator (230) et s'accouplant à un autre corps parmi le premier corps (181) et le second corps (201).

2. Réfrigérateur selon la revendication 1, dans lequel la tige d'accouplement (221) est formée sur le premier corps (181) et est insérée dans le second corps (201), et
dans lequel le second corps (201) est muni d'une première partie d'accouplement (290), la première partie d'accouplement (290) étant agencée pour permettre au second corps (201) d'être accouplé à la tige d'accouplement (221).

3. Réfrigérateur selon la revendication 2, dans lequel la première partie d'accouplement (290) comprend une partie fondue (292) au niveau de laquelle une partie d'extrémité de la tige d'accouplement (221) est fondue sur le second corps (201) pour fournir un accouplement.

4. Réfrigérateur selon l'une quelconque des revendications 1 à 3, dans lequel le premier corps (181) et la plaque de support (270) sont munis d'une partie d'engagement (280) agencée pour engager le premier corps (181) et la plaque de support (270) l'un avec l'autre dans une direction axiale.

5. Réfrigérateur selon la revendication 4, dans lequel la partie d'engagement (280) comprend :
une saillie (282) faisant saillie de l'un parmi le premier corps (181) et la plaque de support (270) ; et
une partie de logement de saillie (284) située au niveau de l'autre parmi le premier corps (181) et la plaque de support (270) et agencée pour recevoir la saillie (282).

6. Réfrigérateur selon l'une quelconque des revendications 1 à 5, dans lequel le premier corps (181) comprend en outre une seconde partie d'accouplement (196) accouplée à la plaque de support (270) .

7. Ensemble selon l'une quelconque des revendications 1 à 6, dans lequel chaque corps parmi le premier corps (181) et le second corps (201) comprend une partie de support de stator (186, 205), chaque partie de support de stator (186, 205) étant respectivement en contact avec un bord du stator (230) pour supporter le stator (230) .

8. Réfrigérateur selon la revendication 7, dans lequel chaque partie de support de stator (186, 205) fait saillie dans le premier corps (181) ou le second corps (201) correspondant et s'étend le long d'une direction circonférentielle du premier corps (181) ou du second corps (201) correspondant.

9. Réfrigérateur selon l'une quelconque des revendications précédentes, dans lequel le carter (180) comprend un palier (190) agencé pour supporter l'arbre de rotation (252).

10. Réfrigérateur selon l'une quelconque des revendications précédentes, comprenant en outre :
une carte de circuit imprimé (260) prévue dans le carter (180), et ayant un circuit de commande configuré pour commander la rotation du rotor (250).

11. Réfrigérateur selon la revendication 10, dans lequel le stator (230) comprend :
dans lequel la carte de circuit imprimé (260) est disposée entre le noyau de stator (232) et le carter (180) .

12. Réfrigérateur selon la revendication 11, dans lequel la carte de circuit imprimé (260) comprend des trous de logement (262) de tiges d'accouplement agencés pour recevoir les tiges d'accouplement (221).

13. Réfrigérateur selon la revendication 11 ou 12, comprenant en outre des parties de fixation (265) agencées pour fixer le stator (230) et la carte de circuit imprimé (260).

14. Réfrigérateur selon la revendication 13, dans lequel chaque partie de fixation (265) comprend :
une broche de fixation (266) prévue sur le noyau du stator (232) ;
un trou de broche de fixation (264) situé au niveau de la carte de circuit imprimé (260) et configuré pour recevoir la broche de fixation (266) ; et
une partie liée (268) située au niveau d'une partie d'extrémité de la broche de fixation (266) et insérée dans le trou de broche de fixation (264).
